# EUROPÄISCHE PATENTSCHRIFT

(11) **EP 0 622 337 B1**
(45) Veröffentlichungstag und Bekanntmachung des Hinweises auf die Patenterteilung: **02.09.1998**
(21) Anmeldenummer: 94103060.3
(22) Anmeldetag: 01.03.1994
(51) Int. Cl.: C02F 1/32

(54) **Vorrichtung zum Behandeln mikrobakteriell belasteter, insbesondere einen Erreger der Gattung Legionella enthaltender Wässer mittels UV-Strahlung**
Apparatus for treating microbiologically polluted waters, particularly waters containing agents of the genus Legionella, through UV-radiation
Dispositif pour le traitement des eaux chargées avec microorganismes, en particulier des agents du genre Legionella avec rayons ultra-violets

(30) Priorität: 12.03.1993 DE 9303682 U
(43) Veröffentlichungstag der Anmeldung: 02.11.1994
(73) Patentinhaber: R&M Kühllagerbau GmbH, 80992 München (DE)
(72) Erfinder: Fricke, Martin, D-99091 Erfurt (DE)
(74) Vertreter: Rau, Manfred, Dr. Dipl.-Ing.

(56) Entgegenhaltungen:
- EP-A- 0 202 891
- EP-A- 0 236 575
- DE-U- 9 207 682
- PATENT ABSTRACTS OF JAPAN vol. 17, no. 200 (C-1050) 20. April 1993 & JP-A-43 046 773 (MITSUBISHI PETROCHEM CO LTD) 2. Dezember 1992

## Beschreibung

Die Erfindung bezieht sich auf eine Vorrichtung zum Behandeln mikrobiell belasteter, insbesondere einen Erreger der Gattung Legionella enthaltender Wässer mittels UV-Strahlung nach dem Oberbegriff des Anspruchs 1.

Eine solche Vorrichtung dient insbesondere dazu, mikrobiell oder mikrobiologisch belastete Flüssigkeiten, wie Wässer, mit Hilfe photochemischer Abbaureaktionen zu behandeln. Unter dem Einfluß des UV-Lichtes entstehen hochreaktive Radikale, die die jeweiligen Schadstoffe angreifen und so bestimmte Abbauraten erreichen. Die die jeweilige Flüssigkeit belastenden Schadstoffe können beispielsweise toxische, möglicherweise auch mutagene und kanzerogene Produkte sein. Insbesondere dient die Vorrichtung zum Behandeln von Wässern, die einen Erreger der Gattung Legionella, wie den Erreger Legionella pneumophila, also den Erreger der sogenannten Legionärskrankheit, enthalten. Die Vorrichtung kann deshalb vorzugsweise zum Behandeln von Wasser aus einer Warmwasser-Anlage eingesetzt werden.

Eine Vorrichtung der eingangs erwähnten Art ist aus der Praxis bekannt. Bei dieser Vorrichtung ist der UV-Strahler derartig geschaltet, daß er entweder unter Vollast arbeitet oder ausgeschaltet ist. Eine solche Betriebsweise hat aber nachteilige Auswirkungen zum einen auf die Lebensdauer des Strahlers, da diese durch häufiges Ein- und Ausschalter deutlich reduziert wird. Außerdem läßt sich die benötigte maximale Bestrahlungsstärke des UV-Strahlers in der Regel nicht unmittelbar nach dem Einschalten desselben erreichen. Auf der anderen Seite ergeben sich, um Schaltvorgänge zu vermeiden, bei einem nicht erforderlichen Dauerbetrieb des Strahlers höhere Betriebstemperaturen, so daß der Strahler nicht in seinem optimalen Temperaturbereich arbeiten kann. Dadurch wird der Wirkungsgrad des Strahlers verringert.

Eine Vorrichtung gemaß dem Oberbegriff des Patentanspruches 1 ist aus der DE-U-92 07 682 bekannt. Bei dieser Vorrichtung strömt das zu entkeimende Wasser mäanderförmig durch verschiedene Zonen des Behälters. Der UV-Strahler steht mit dem zu entkeimenden Wasser in unmittelbarem Kontakt, so daß für einen Austausch des Strahlers das Wasser aus der Vorrichtung abzulassen ist. Ein solcher Austausch des Strahlers ist deshalb aufwendig und kostenintensiv. Andererseits ist aufgrund des unmittelbaren Kontakts ein guter Wärmeübergang zwischen UV-Strahler und Wasser möglich.

Aus der EP-A-0 236 575 ist eine Vorrichtung bekannt, bei der ein U-förmiger UV-Strahler von einem zylindrischen Schutzrohr umgeben und dadurch von der zu entkeimenden Flüssigkeit abgeschirmt ist. Der UV-Strahler hat an seinem unteren Ende einen rohrförmigen Ansatz, welcher in einem Wärmeleitkörper mittels Kontaktfedern gehalten ist. Der Wärmeleitkörper weist mehrere Öffnungen auf, durch die Luft von unten her in den Raum zwischen dem UV-Strahler und dem Schutzrohr einleitbar ist. Im übrigen weist die bekannte Vorrichtung eine kompliziert aufgebaute Kühleinrichtung auf.

Der Erfindung liegt die Aufgabe zugrunde, eine Vorrichtung der gattungsgemäßen Art zu schaffen, bei der der UV-Strahler wirtschaftlicher austauschbar ist und erhöhte Betriebstemperaturen wirksam verhindert sind.

Diese Aufgabe wird erfindungsgemäß durch die im Kennzeichnungsteil des Anspruches 1 angegebenen Merkmale gelöst.

Vorteilhafte Ausführungsformen der Erfindung sind in den Unteransprüchen 2 bis 8 angegeben.

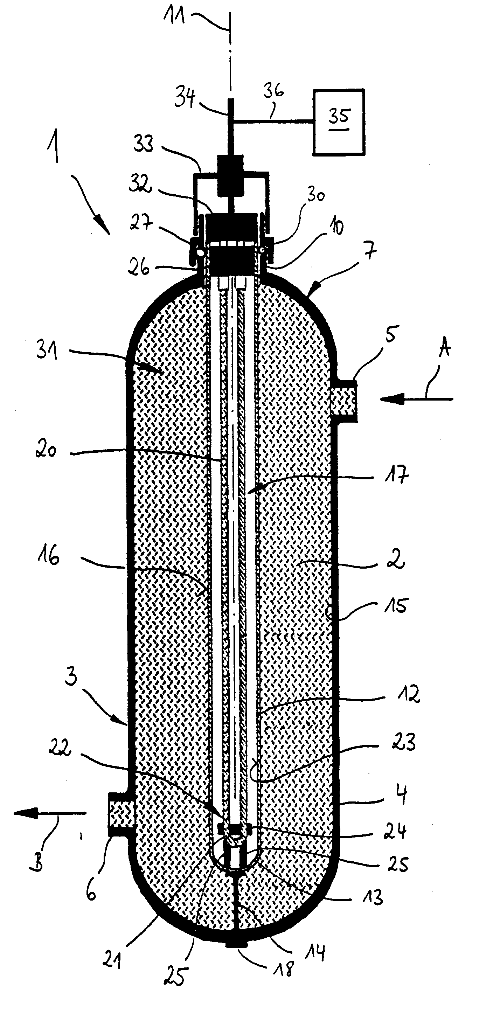

Ein Ausführungsbeispel des Erfindungsgegenstandes wird nachfolgend an Hand der Zeichnung näher erläutert, deren einzige Figur zeigt
eine teilweise geschnittene schematische Seitenansicht einer Vorrichtung zum Behandeln mikrobiell belasteter Wässer.

In der Figur ist eine Vorrichtung 1 zum Behandeln eines mikrobiell oder mikrobiologisch belasteten Wassers 2 mittels UV-Strahlung teilweise im Schnitt schematisch dargestellt. Das Wasser kann insbesondere mit dem die sogenannte Legionärskrankheit verursachenden Erreger Legionella pneumophilo oder einem anderen Erreger der Gattung Legionella belastet sein. Üblicherweise ist das Wasser kalt oder warm.

Die Vorrichtung 1 weist einen zylindrischen Behälter 3 auf, der gemäß der Figur als Tauchreaktor ausgebildet ist. Der Behälter 3 weist ein Gehäuse 4 auf, das mit einem Flüssigkeitseinlaß 5 sowie mit einem Flüssigkeitsauslaß 6 versehen ist. An seinem oberen Ende 7 hat der Behälter 3 eine Öffnung 10, durch deren Mittelpunkt die vertikale Längsachse 11 des Behälters 2 verlauft. In die Öffnung ist ein Tauchrohr 12, beispielsweise aus Quarzglas, derart in den Behälter 3 eingesteckt, daß es sich nahezu über dessen gesamte Länge erstreckt. Das Tauchrohr hat einen zylindrischen Querschnitt, ist an seinem unteren Ende 13 etwa halbkugelförmig ausgebildet und mittels einer Stütze 14 beabstandet von der Gehäuseinnenwand 15 gehalten. Der vertikale Abstand zwischen dem unteren Ende 13 des Tauchrohrs 12 und der Gehäuseinnenwand 15 in diesem Bereich entspricht etwa dem Abstand zwischen der Tauchrohraußenwand 16 und der Gehäuseinnenwand 15 in dem oberhalb des unteren Endes 13 ausgebildeten Teil des Tauchrohrs 12. Das obere Ende der Stütze 14 ist als das Tauchrohr 12 zentrierender Federstreifen, das untere Ende als Ablaßschraube 13 ausgebildet.

Innernalb des Tauchrohrs 12 erstreckt sich ein auf das Wasser einwirkender UV-Strahler 17, der ein Niederdruckstrahler, vorzugsweise ein Quecksilberdampfstrahler, ist. Gemäß der Figur weist der UV-Strahler 17 einen U-förmigen Stab auf, der zentrisch in dem Tauchrohr 12, d.h. parallel zur vertikaler Längsachse 11, angeordnet ist. Nahe seinem U-förmigen Bogen 21 ist der UV-Strahler 17 durch einen wärmeleitenden Körper 23 mit der Innenwand 23 des Tauchrohrs verbunden. Der wärmeleitende Körper 22 besteht vorzugsweise aus Metall und weist einen schellenartigen Abschnitt 24 auf, der beide Schenkel des U-förmigen Stabes 20 des Strahlers umfaßt. Mit dem schellenartigen Abschnitt 24 sind mehrere Federstreifen 25 einstückig verbunden, deren freie Enden flächig an der Innenwand des Tauchrohrs anliegen. Dadurch ist eine Wärmeleitung von der kältesten Stelle des UV-Strahlers 17 zum Tauchrohr 12 gewährleistet.

An seinem oberen, dem U-förmigen Bogen 21 gegenüberliegenden Ende ist der Stab 20 des Strahlers in einer Halterung 26 abgestützt, deren Außendurchmesser etwa dem Innendurchmesser des Tauchrohres 12 entspricht. Die elektrischen Anschlüsse (nicht näher gezeigt) des Strahlers erstrecken sich durch die Halterung 26 hindurch nach außen. Auf die Öffnung 10 ist eine Verschraubung 27 aufgeschraubt, die mit Hilfe einer quer zur Längsachse 11 verlaufenden Schulter eine O-Ringdichtung auf dem oberen Rand der Öffnung 10 einklemmt. Diese O-Ringdichtung liegt sowohl an der Öffnung 10 des Gehäuses 4, der vorerwähnten Schulter der Verschraubung 27, als auch an der Tauchrohraußenwand 16 an und dichtet dadurch den das Wasser 2 aufnehmenden Innenraum 31 des Behälters 3 zur Umgebung hin ab.

In der Verschraubung 27 sitzt ferner oberhalb der Halterung 26 ein stopfenförmiges Verschlußteil 32, das ebenso wie die Verschraubung 27 mittels einer Kappe 33 abgedeckt ist. Die elektrischen Anschlüsse des UV-Strahlers 17 sind durch das Verschlußteil 32 und die Kappe 33 nach außen geführt und bilden außerhalb des Verschlußteils 32 ein elektrisches Anschlußkabel 34. Dieses wird zum Betreiben der erfindungsgemäßen Vorrichtung mit einer elektrischen Spannungsquelle (nicht gezeigt) verbunden.

Erfindungsgemäß ist der UV-Strahler 17 mittels eines damit verbundenen Vorschaltgeräts 35 dimmbar. Gemäß der Figur ist das Vorschaltgerät 35 über ein elektrisches Kabel 36 mit dem Anschlußkabel 34 des UV-Strahlers verbunden. Das Vorschaltgerät 35 ist derartig angeschlossen und eingestellt, daß der Strahler unter Vollast ebenso wie unter Teillast betrieben werden kann. Es ist möglich, das Vorschaltgerät so auszugestalten, daß es die Spannung zum UV-Strahler in Abhängigkeit von der Durchflußmenge des Wassers durch den Behälter 3 elektronisch regelt. Außerdem ist das Vorschaltgerät 35 derart ausgebildet, daß die elektrische Leistung des UV-Strahlers 17 im gedimmten Zustand, d.h. unter Teillast, etwa 20% der elektrischen Leistung unter Vollast trägt.

Es ist klar, daß auch das Vorschaltgerät 35 mit einer elektrischen Spannungsquelle verbunden ist und spezielle Anschlüsse für die Dimmspannung aufweist, die über das Kabel 36 und das Anschlußkabel 34 mit dem UV-Strahler 17 zum Steuern der Leistungsabgabe desselben verbunden sind.

Die zu behandelnde Flüssigkeit ist vorzugsweise warmes Wasser mit einer Temperatur von weniger als 80°C, insbesondere von weniger als 60°C. Die Vorrichtung 1 kann insbesondere als Desinfektionsgerät von warmem Wasser für Duschen eingesetzt werden.

Es ist ferner möglich, mit Hilfe des Vorschaltgeräts 35 die Bestrahlungsstärke des UV-Strahlers zwischen 1 und 100% zu variieren. Der vorerwähnte Teillastbereich im gedimmten Zustand von etwa 20% der elektrischen Leistung des Strahlers ist deshalb lediglich beispielhaft angegeben.

Die Vorrichtung 1 weist beispielhaft folgende Abmessungen und Daten auf.

Der als Tauchreaktor ausgebildete Behälter 3 ist für eine Gesamtdurchflußmenge von 6000 l/h Wasser ausgelegt und kann damit eine Gruppendusche mit acht einzelnen Duschköpfen versorgen. Dabei wurde eine Durchflußmenge pro Duschkopf von 12,5 l/min angenommen. Der Innendurchmesser des Flüssigkeitseinlasses 5 sowie des -auslasses 6 beträgt etwa 2,54 cm. Der Behälter 3 weist eine Gesamtlänge von etwa 60 cm sowie einen Außendurchmesser von etwa 10 cm auf. Die elektrische Leistung des UV-Strahlers beträgt unter Vollast etwa 60 W und unter Teillast etwa 12 W. Die Temperatur des Wassers im Behälter ist vorzugsweise geringer als 60°C. Unter den vorgenannten Bedingungen beträgt die maximale Leistungsabgabe des UV-Strahlers etwa 15 mJ/cm².

Der Betrieb der zuvor beschriebenen Vorrichtung wird nachfolgend näher erläutert.

Das warme Wasser strömt in Richtung des Pfeils A über den Flüssigkeitseinlaß 5 in den Behälter 3 ein und aus dem Flüssigkeitsauslaß 6 in Richtung des Pfeils B aus dem Behälter aus, wobei die Durchflußmengen so gewählt sind, daß der gesamte Innenraum 31 des Behälters 3 mit dem zu behandelnden Wasser ausgefüllt ist. Das Tauchrohr 12 und damit der UV-Strahler 17 sind dann nahezu vollständig von dem zu behandelnden Wasser umgeben.

Es ist klar, daß die erfindungsgemäße Vorrichtung sowohl kontinuierlich als auch diskontinuierlich betrieben werden kann.

Anschließend wird der UV-Strahler eingeschaltet und das zu behandelnde Wasser so lange mit UV-Licht bestrahlt, bis das Wasser die gewünschte Qualität aufweist. Sobald die gewünschte Produktqualität erreicht ist, wird der UV-Strahler mit Hilfe des Vorschaltgeräts 35 nicht mehr unter Vollast, also mit etwa 60 W, sondern unter Teillast, d.h. im gedimmten Zustand, also bei etwa 12 W betrieben. Bei der erfindungsgemäßen Vorrichtung ist die Lebensdauer und der Wirkungsgrad des verwendeten UV-Strahlers deutlich verbessert, so daß eine solche Vorrichtung bei geringen Betriebskosten und somit besonders wirtschaftlich betrieben werden kann.

## Patentansprüche

1. Vorrichtung zum Behandeln mikrobiell belasteter, insbesondere einen Erreger der Gattung Legionella enthaltender Wässer mittels UV-Strahlung,
mit einem das Wasser aufnehmenden Behälter (3) und einem auf das Wasser einwirkenden, U-förmigen UV-Strahler (17), dessen Bestrahlungsstärke regelbar ist,
**dadurch gekennzeichnet, daß**
der UV-Strahler (17) von einem in das Wasser hineinragenden Tauchrohr (12) mit einem unteren, halbkugelförmig ausgebildeten Ende (13) umgeben und nahe seinem U-förmigen Bogen (21) mit der halbkugelförmigen Innenwand (23) des Tauchrohres (12) durch einen wärmeleitenden Körper (22) verbunden ist.

2. Vorrichtung nach Anspruch 1, **dadurch gekennzeichnet, daß** der wärmeleitende Körper (22) einen schellenartigen Abschnitt (24) aufweist, der beide Schenkel des UV-Strahlers (17) umfaßt, und vorzugsweise aus Metall gefertigt ist.

3. Vorrichtung nach Anspruch 2, **dadurch gekennzeichnet, daß** der wärmeleitende Körper (22) einen oder mehrere vorzugsweise einstückig mit dem schellenartigen Abschnitt (24) verbundene Federstreifen (25) aufweist, deren freie Enden flächig an der Innenwand (23) des Tauchrohres (12) anliegen.

4. Vorrichtung nach einem der Ansprüche 1 bis 3, **dadurch gekennzeichnet, daß** das Tauchrohr (12) an seinem unteren Ende (13) mittels einer Stütze (14), von der Gehäuseinnenwand (15) beabstandet, gehalten ist.

5. Vorrichtung nach Anspruch 4, **dadurch gekennzeichnet, daß** das obere Ende der Stütze (14) als das Tauchrohr (12) zentrierender Federstreifen und das untere Ende als Ablaßschraube (18) ausgebildet ist.

6. Vorrichtung nach einem der vorhergehenden Ansprüche, **dadurch gekennzeichnet, daß** der vertikale Abstand zwischen dem unteren Ende (13) des Tauchrohres (12) und der Gehäuseinnenwand (15) in diesem Bereich etwa dem Abstand zwischen der Tauchrohraußenwand (16) und der Gehäuseinnenwand (15) in dem oberhalb des unteren Endes (13) ausgebildeten Teil des Tauchrohres entspricht.

7. Vorrichtung nach einem der vorhergehenden Ansprüche, **dadurch gekennzeichnet, daß** der UV-Strahler (17) ein Niederdruckstrahler, vorzugsweise ein Quecksilberdampfstrahler, ist.

8. Vorrichtung nach einem der vorhergehenden Ansprüche, **dadurch gekennzeichnet, daß** der UV-Strahler (17) wenigstens einen U-förmigen Stab (20) aufweist, der vorzugsweise zentrisch in den als Tauchreaktor ausgebildeten Behälter (3) hineinragt.

## Claims

1. Apparatus for treating microbically polluted waters, in particular waters containing a germ of the genus Legionella, by UV radiation, comprising
a tank (3), which takes up the water, and a U-shaped ultraviolet emitter (17), which acts on the water and the intensity of irradiation of which is adjustable,
**characterized in that**
the ultraviolet emitter (17) is enclosed by an immersion pipe (12), which projects into the water and has a lower semi-spherical end (13), and in that in vicinity to its U-shaped bow (21), it is connected with the semi-spherical inside wall (23) of the immersion pipe (12) by means of a heat-conducting body (22).

2. Apparatus according to claim 1, **characterized in that** the heat-conducting body (22) comprises a clamp-type section (24) which embraces both legs of the ultraviolet emitter (17) and is preferably made from metal.

3. Apparatus according to claim 2, **characterized in that** the heat-conducting body (22) comprises one or several spring strips (25), which are preferably integrally united with the clamp-type section (24) and the free ends of which rest flatly on the inside wall (23) of the immersion pipe (12).

4. Apparatus according to one of claims 1 to 3, **characterized in that** at its lower end (13), the immersion pipe (12) is held at a distance from the housing inside wall (15) by means of a prop (14).

5. Apparatus according to claim 4, **characterized in that** the upper end of the prop (14) is a spring strip centering the immersion pipe (12) and the lower end is a discharging screw (18).

6. Apparatus according to one of the preceding claims, **characterized in that** the vertical distance between the lower end (13) of the immersion pipe (12) and the housing inside wall (15), in this area, approximately corresponds to the distance between the immersion-pipe outside wall (16) and the housing inside wall (15) in that part of the immersion pipe which is formed above the lower end (13).

7. Apparatus according to one of the preceding claims, **characterized in that** the ultraviolet emitter (17) is a low-pressure emitter, preferably a mercury-vapor emitter.

8. Apparatus according to one of the preceding claims, **characterized in that** the ultraviolet emitter (17) comprises at least one U-shaped rod (20) which projects preferably centrically into the tank (3) in the form of an immersion reactor.

## Revendications

1. Dispositif destiné au traitement d'eaux chargées en micro-organismes, contenant notamment un agent pathogène du genre légionella, au moyen de rayonnement UV,
comportant un réservoir (3) recevant l'eau, et un émetteur (17) d'UV en forme de U agissant sur l'eau, dont l'intensité de rayonnement est réglable,
**caractérisé en ce que**
l'émetteur (17) d'UV est entouré d'un tube plongeur (12) pénétrant dans l'eau, qui comporte une extrémité inférieure (13) hémisphérique, et en ce qu'à proximité de son coude (21) en forme de U, il est relié à la paroi intérieure (23) hémisphérique du tube plongeur (12) par l'intermédiaire d'un corps (22) conducteur de chaleur.

2. Dispositif selon la revendication 1, **caractérisé en ce que** le corps (22) conducteur de chaleur comporte une section (24) de type bride, qui enserre les deux branches de l'émetteur (17) d'UV et qui est de préférence en métal.

3. Dispositif selon la revendication 2, **caractérisé en ce que** le corps (22) conducteur de chaleur comporte une ou plusieurs bandes élastiques (25), qui sont de préférence reliées d'un seul tenant à la section (24) de type bride, dont les extrémités libres prennent appui sur la surface de la paroi intérieure (23) du tube plongeur (12).

4. Dispositif selon l'une quelconque des revendications 1 à 3, **caractérisé en ce que**, au niveau de son extrémité inférieure (13), le tube plongeur (12) est écarté de la paroi intérieure du carter (15) au moyen d'un support (14).

5. Dispositif selon la revendication 4, **caractérisé en ce que** l'extrémité supérieure du support (14) est réalisée sous la forme d'une bande élastique qui centre le tube plongeur (12), et l'extrémité inférieure en tant que vis d'évacuation (18).

6. Dispositif selon l'une quelconque des revendications précédentes, **caractérisé en ce que** l'écartement vertical entre l'extrémité inférieure (13) du tube plongeur (12) et la paroi intérieure du carter (15) située dans cette zone correspond approximativement à l'écartement existant entre la paroi extérieure (16) du tube plongeur et la paroi intérieure du carter (15) dans la partie du tube plongeur située au-dessus de l'extrémité inférieure (13).

7. Dispositif selon l'une quelconque des revendications précédentes, **caractérisé en ce que** l'émetteur (17) d'UV est un émetteur à basse pression, de préférence un émetteur à vapeur de mercure.

8. Dispositif selon l'une quelconque des revendications précédentes, **caractérisé en ce que** l'émetteur (17) d'UV comporte au moins une barre (20) en forme de U, qui pénètre de préférence de façon centrée dans le réservoir (3) réalisé sous la forme d'un réacteur de plongée.
